# EUROPÄISCHE PATENTSCHRIFT

(11) **EP 3 827 931 B1**
(45) Veröffentlichungstag und Bekanntmachung des Hinweises auf die Patenterteilung: **06.09.2023**
(21) Anmeldenummer: 19211726.5
(22) Anmeldetag: 27.11.2019
(51) Int. Cl.: B25H 3/00, B65D 1/38

(54) **WERKSTÜCKKORBSYSTEM UND SATZ VON WERKSTÜCKKORBSYSTEMEN**
WORKPIECE BASKET SYSTEM AND SET OF WORKPIECE BASKET SYSTEMS
SYSTÈME DE PANIER DE PIÈCES ET ENSEMBLE DE SYSTÈMES DE PANIER DE PIÈCES

(43) Veröffentlichungstag der Anmeldung: 02.06.2021
(73) Patentinhaber: ZELL Systemtechnik GmbH, 89584 Ehingen-Volkersheim (DE)
(72) Erfinder: Zell, Ingo, 89584 Ehingen-Volkersheim (DE)
(74) Vertreter: Baur & Weber Patentanwälte PartG mbB

(56) Entgegenhaltungen:
- WO-A1-2017/191628
- WO-A1-2019/020294
- DE-A1-102016 006 620
- DE-U1-202016 102 444
- GB-A- 927 767
- GB-A- 2 241 940
- US-A- 5 294 009
- US-A1- 2012 061 930
- US-A1- 2012 085 714
- US-A1- 2015 190 920
- US-A1- 2019 009 403

## Beschreibung

Die Erfindung betrifft ein Werkstückkorbsystem mit einem Rahmen und zumindest einem Werkstückträgereinsatz, der in den Rahmen eingesetzt werden kann, um zusammen mit dem Rahmen einen Werkstückkorb zu bilden. Die Erfindung betrifft ferner einen Satz von mehreren Werkstückkorbsystemen.

Werkstückkörbe dienen dazu, Werkstücke während ihrer Fertigung, zum Transport, zum Waschen oder zur Lagerung aufzunehmen. Durch Halter und Aufnahmen des Werkstückkorbes können die Werkstücke in einer gewünschten Position gehalten werden und gruppiert werden. Werkstückkörbe ermöglichen es, die Werkstücke im Rahmen des Fertigungsprozesses einer oder mehreren Fertigungsstationen zuzuführen und zu bearbeiten und/oder sie zwischen den Fertigungsstationen zu transportieren und/oder sie zwischen den Fertigungsschritten zu lagern. In den Fertigungsstationen können Fertigungsschritte wie Waschen, mechanische Bearbeitung oder thermisches Härten durchgeführt werden.

Konventionelle Werkstückkörbe umfassen Halter oder Aufnahmen für Werkstücke als integrale Bestandteile des Werkstückkorbes. Grundfläche und Höhe des Werkstückkorbes und die Gestaltung seiner Halter oder Aufnahmen sind an die zu bearbeitenden Werkstücke und/oder die Fertigungsstation, in der der Werkstückkorb verwendet wird, angepasst. Bei einer Umstellung des Fertigungsprozesses ist der Austausch des gesamten Werkstückkorbes erforderlich. Bereits eine geringfügige Änderung am Design der zu fertigenden Werkstücke kann den Austausch des Werkstückkorbes nach sich ziehen, da die Halter oder die Aufnahmen nicht mehr zum geänderten Design passen.

Die DE 10 2016 006620 A1 zeigt eine Vorrichtung zur Aufnahme von Kleinteilen für die Prozessschritte Transport, Reinigung und Automatisierung. Die Vorrichtung weist ein stabgitterförmig ausgestaltetes Trägerelement zur Aufnahme von mindestens einem Werkstückträger auf, wobei der Werkstückträger durch das Trägerelement zwischen mindestens zwei Prozessschritten verlagerbar ist.

Die WO 2017/191628 A1 zeigt einen Kupplungsmechanismus zum lösbaren Verbinden von zwei oder mehreren Nutzmodulen miteinander oder mit Nutzbaugruppen oder mobilen Trägern.

Die WO 2019/020294 A1 zeigt eine Schubladenstruktur zum werkzeugfrei abnehmbaren Lagern eines Aufnahmekörpers an oder in einer Lagervorrichtung. Die Schubladenstruktur umfasst eine erste Schubladenführung mit einem an einer ersten Seite der Lagervorrichtung starr zu befestigenden ersten Schubladenkörper und mit einem an dem ersten Schubladenkörper beweglich angebrachten zweiten Schubladenkörper, eine zweite Schubladenführung mit einem an einer zweiten Seite der Lagervorrichtung starr zu befestigenden ersten Schubladenkörper und mit einem an dem ersten Schubladenkörper beweglich angebrachten zweiten Schubladenkörper, eine Verbindungsstruktur, welche die beweglichen zweiten Schubladenkörper verbindet, und Kopplungsstrukturen, die ausgebildet sind, mit korrespondierenden Kopplungsstrukturen des Aufnahmekörpers in Wirkverbindung, insbesondere in Eingriff, gebracht zu werden, um den Aufnahmekörper an der Schubladenstruktur werkzeugfrei abnehmbar zu lagern.

Die DE 20 2016 102444 U1 zeigt einen Werkzeugwagen mit vier Stangen an den Seiten und rechteckigen Halterahmen, deren Eckbereiche an den Stangen befestigt sind. Werkzeugkästen mit ausziehbaren Schubladen sind auf den Halterahmen angeordnet.

Die US 2015/190920 A1 zeigt ein Modulsystem, das ein Gehäuse mit aufklappbarem Deckel und eine Mehrzahl von Boxen umfasst. Die Boxen sind im Innenraum des Gehäuses zu lagern.

Die US 2012/085714 A1 zeigt Drahtgitterwände, die an einem Ständer oder einer Werkzeughalterung befestigt werden können und so konfiguriert sind, dass sie Materialhalterungen aufnehmen können, z. B. Regalkörbe, Scheibenhalter, Kistenhalter, Haken usw.

Die US 2012/061930 A1 zeigt einen Werkzeugwagen mit vier Stangen an den Seiten und flachen Drahtkörben, deren Eckbereiche an den Stangen befestigt sind. Flache Kisten sind auf den Drahtkörben angeordnet. Im auseinandergebauten Zustand sind die Drahtkörbe übereinander stapelbar.

Die GB 2 241 940 A zeigt ein stapelbares Werkzeugtablett mit Griff. Durch eine Aussparung unterhalb des Griffes sind zwei Werkzeugtabletts stapelbar, indem der Griff des unteren Werkzeugtabletts durch die Aussparung des oberen Werkzeugtabletts greift und dessen Griff abstützt.

Die US 5 294 009 A zeigt einen Wäschewagen mit segmentierten Komponenten, die so angeordnet sind, dass sie leicht aneinander befestigt werden können, um einen leichten Auf- und Abbau zu ermöglichen. Der Wäschewagen hat einschiebbare Körbe.

Die US 2019/009403 A1 zeigt einen Werkzeugkasten mit aufklappbarem Deckel, in dem mehrere Kisten eingesetzt sind.

Es stellt sich die Aufgabe einen materialsparenden Ansatz für die Bereitstellung von Werkstückkörben vorzusehen. Zu diesem Zweck sind ein Werkstücckorbsystem und ein Satz von Werkstückkörben gemäß den nebengeordneten Ansprüchen vorgesehen.

Das Werkstückkorbsystem umfasst zumindest einen austauschbaren Werkstückträgereinsatz und einen Rahmen mit einer Haltevorrichtung für den in den Rahmen einsetzbaren oder eingesetzten zumindest einen Werkstückträgereinsatz, sodass bei eingesetztem zumindest einem Werkstückträgereinsatz der Rahmen und der zumindest eine Werkstückträgereinsatz zusammen einen Werkstückkorb bilden. Der Rahmen ist derart ausgebildet, dass mehrere Rahmen übereinander stapelbar sind. Die Haltevorrichtung ist derart ausgebildet, dass sie den Werkstückträgereinsatz lösbar hält. Der Rahmen umfasst eine Drahtoberkante und eine Drahtunterkante, die voneinander beabstandet sind und durch Blechstreifen fest verbunden sind, wobei zwischen den Blechstreifen großfläche Aussparungen sind.

Das Werkstückkorbsystem umfasst einerseits den Werkstückträgereinsatz und den Rahmen als Einzelkomponenten und andererseits den Werkstückkorb aus Rahmen mit eingesetztem Werkstückträger. Durch Zusammensetzen von Rahmen und Werkstückträgereinsatz wird ein Werkstückkorb gebildet, der durch Auseinandernehmen der Komponenten wieder in Rahmen und Werkstückträgereinsatz zerlegt werden kann. Durch den Austausch des Werkstückträgereinsatzes durch einen anderen Werkstückträgereinsatz und dessen Einsetzen in den Rahmen kann bei verändertem Fertigungsprozess der Werkstückkorb an andere Werkstücke angepasst werden. Der ausgetauschte Werkstückträgereinsatz kann ebenfalls wiederverwendet werden und beispielsweise mit einem höheren oder niedrigeren Rahmen zu einem Werkstückkorb zusammengefügt werden.

Bei im Rahmen eingesetztem zumindest einem Werkstückträgereinsatz wird der zumindest eine Werkstückträgereinsatz so gehalten, dass die Bewegung des Werkstückträgereinsatzes relativ zum Rahmen zumindest hinsichtlich eines Freiheitsgrades eingeschränkt ist. Dies kann eine feste Verbindung sein, bei der der Werkstückträgereinsatz weder verrutschen noch rotieren noch herausfallen kann, sodass weder eine Rotationsbewegung um noch eine Translationsbewegung in eine der drei Raumachse, d.h. x-, y-, oder z-Achse, möglich ist. Für viele Anwendungen ist eine Halterung des zumindest einem Werkstückträgereinsatzes, die nur einen Teil der Bewegungsmöglichkeiten beschränkt, ausreichend. Dies kann bereits eine Halterung durch Einhängen oder Einsetzen des Werkstückträgereinsatzes in den Rahmen sein, bei der der Werkstückträgereinsatz im Rahmen gehalten wird solange die Werkstückkiste nicht von oben nach unten gedreht wird.

Die Haltevorrichtung kann derart ausgebildet sein, dass sie den Werkstückträgereinsatz in einem unteren Bereich des Rahmens hält, sodass der Werkstückträgereinsatz als Boden dient. In einem alternativen Ausführungsbeispiel ist der Werkstückträgereinsatz in einem oberen Bereich angeordnet, um beispielsweise das Einhängen von Werkstücken in den Werkstückträgereinsatz zu ermöglichen. In einem weiteren Ausführungsbeispiel kann der Werkstückträgerbereich in einem mittleren Bereich angeordnet sein. Die Haltevorrichtung kann so ausgebildet sein, dass sie das Halten eines Werkstückeinsatzes in verschiedenen Positionen, z.B. oben oder unten oder in der Mitte, erlaubt.

Der Rahmen, und die damit gebildete Werkstückkiste, ist stapelbar, sodass mehrere Werkstückkisten in einer Fertigungsstation oder bei Transport oder Lagerung gestapelt werden können, was mit einem geringeren Platzbedarf hinsichtlich der benötigten Stellfläche einhergeht. Die Ober- und Unterseite des Rahmens sind so geformt, dass sie bei zwei übereinander angeordneten Rahmen einen Formschluss bilden, der ein Verrutschen verhindert. Dies kann durch eine Erhöhung der Rahmenoberseite erreicht werden, die in eine Aussparung auf der Rahmenunterseite eingreift. Alternativ greifen Vorsprünge an der Rahmenunterseite in den oberen Rahmenbereich des darunter positionierten Rahmens ein.

Der Rahmen hat eine Drahtoberkante und eine Drahtunterkante, die voneinander beabstandet sind und durch Blechstreifen fest verbunden sind. Zwischen den Blechstreifen sind großfläche Aussparungen, wodurch die Werkstücke von der Seite gut zugänglich sind.

Vorteilhafterweise ist die Haltevorrichtung derart ausgebildet, dass sie den zumindest einen Werkstückträgereinsatz mittels einer Schraubverbindung und/oder mittels einer Pressverbindung und/oder mittels Zusammensetzens und/oder mittels Reibung hält. Eine Schraubverbindung ermöglicht eine feste Verbindung, beispielsweise durch Schrauben in den vier Eckbereichen des Rahmens. Bei einer Pressverbindung erfolgt eine kraftschlüssige Verbindung, indem zumindest eine der zu verbindenden Komponenten elastisch verformt wird und ungewünschtes Lösen durch Kraftschluss verhindert wird. An- und Aufpressen sowie Klemmen sind Pressverbindungen. Zusammensetzen umfasst Aufsetzen, Einsetzen, Einhängen und Ineinanderschieben. Beim Zusammensetzen kann ein Formschluss gebildet werden, beispielsweise durch Haken und Ösen. Aber auch ein Aufsetzen oder Auflegen des Werkstückträgereinsatzes auf die Haltevorrichtung, sodass er durch Schwerkraft und Reibung in seiner Position gehalten wird, wird als Zusammensetzen angesehen. Es gibt Verbindungen, bei denen Form und Kraftschluss kombiniert sind, beispielsweise bei einer Rastverbindung, bei der ein elastischer Rasthaken in einer Aussparung gehalten wird.

In einer Ausführung ist der Rahmen ausgebildet, in ihn mehrere Werkstückträgereinsätze einzusetzen, sodass die Werkstückträgereinsätze übereinander und/oder nebeneinander angeordnet sind. Jeder der Werkstückträgereinsätze kann eine Haltevorrichtung aufweisen, die mit der Haltevorrichtung des Rahmens oder einer Haltevorrichtung eines anderen Werkstückträgereinsatzes verbindbar ist. Mehrere Werkstückträgereinsätze können beispielsweise aufeinander gestapelt in denselben Rahmen eingesetzt werden, sodass nur der unterste von der Haltevorrichtung des Rahmens gehalten wird. Mehrere solcher gestapelten Werkstückträgereinsätze können nebeneinander im Rahmen angeordnet sein.

In einer Ausführung ist der Rahmen ausgebildet, in ihn mehrere Werkstückträgereinsätze einzusetzen, von denen sich zumindest zwei unterscheiden. Dadurch kann der Werkstückträgerkorb mit verschiedenen Werkstücken bestückt werden, was mit einer besseren Platzausnutzung einhergeht.

In einer Ausführung weist der Werkstückträgereinsatz zumindest eine Aufnahme oder einen Halter für zumindest ein Werkstück auf. Der Halter hält das Werkstück in einer gewünschten Position. Eine Aufnahme umfasst einen Behälter für ein oder mehrere Werkstücke, und ist beispielsweise als Kunststoffkorb ausgebildet.

In einer Ausführung ist die Aufnahme oder der Halter lösbar mit einer Platte des Werkstückträgereinsatzes verbunden und austauschbar, sodass der Werkstückträgereinsatz an veränderte Fertigungsverfahren anpassbar ist. Die Aufnahme oder der Halter können mittels einer Pressverbindung und/oder einer Schraubverbindung oder durch Zusammensetzen verbunden sein, um eine feste aber dennoch lösbare Verbindung zu erzielen.

In einer Ausführung umfasst der Werkstückträgereinsatz eine Platte mit Aussparungen, in die die Aufnahmen und/oder die Halter für Werkstücke einsetzbar und/oder einklemmbar und/oder einrastbar sind. Die Aufnahme oder der Halter haben einen Fuß, dessen Form derart mit der Aussparung korrespondiert, sodass er eingesteckt kraftschlüssig gehalten wird oder durch Drehen kraft- und formschlüssig in seiner Position fixiert wird. Aufnahmen können in einer Ausführung in die Aussparungen eingesetzt oder eingehängt werden.

In einer Ausführung umfasst der Werkstückträgereinsatz eine Gitterplatte, auf die die Aufnahmen und/oder die Halter klemmbar oder aufsetzbar sind und/oder in deren Gitterlöcher die Aufnahmen und/oder die Halter einsetzbar oder klemmbar sind. Die Gitterplatte bietet an den Kreuzungspunkten des Gitters und in den Aussparungen gute Befestigungsmöglichkeiten, wobei die Werkstücke auf Grund des Gitters auch von unten zugänglich sind.

In einer Ausführung umfasst der Werkstückträgereinsatz Metall und/oder Kunststoff, und der Rahmen ist metallen. Metall ist ein stabiler Werkstoff. Kunststoff ermöglicht die Fertigung von Haltern und Aufnahmen nahezu beliebiger Gestalt und von geringem Gewicht.

Vorteilhafterweise weist der Rahmen ausklappbare Griffe auf, die den Transport und das Aufstapeln der Werkstückkisten erleichtern.

Ein Satz umfasst eine Mehrzahl von den oben beschriebenen Werkstücckorbsystemen. Zumindest einer der Werkstückträgereinsätze ist in mehr als einen der Rahmen einsetzbar, um einen Werkstückkorb zu bilden, sodass mit dem Satz Werkstückkörbe veränderbar ausgebildet werden können.

Jedes Werkstückkorbsystem hat eine Rahmenhöhe aus einer Gruppe von vorgegebenen Rahmenhöhen, wobei sich die Rahmenhöhen zumindest zweier Werkstückkorbsysteme des Satzes unterscheiden, sodass es verschiedene Rahmenhöhen innerhalb des Satzes gibt. Durch die Kombination verschiedener Werkstückträgereinsätze und verschiedener Rahmen lassen sich Werkstückkisten bilden, die an verschiedene Fertigungsanforderungen anpassbar sind und nach ihrem Einsatz neu zusammengesetzt und wieder verwendet werden können. Die Rahmen des Satzes können dieselbe Grundfläche haben. Zusätzlich können die Rahmen sich auch hinsichtlich Ihrer Grundfläche unterscheiden, wobei mehrere Rahmen kleinerer Grundfläche nebeneinander auf oder unter einen Rahmen größerer Grundfläche stapelbar sind.

Die Werkstückträgereinsätze zumindest zweier Werkstückkorbsysteme können sich unterscheiden. Die Aufnahmen und/oder die Halter eines der Werkstückträgereinsätze können sich hinsichtlich ihrer Form und/oder Anordnung von den Aufnahmen und/oder den Haltern eines anderen Werkstückträgereinsatzes unterscheiden. Durch die verschiedenen Rahmen und verschiedenen Werkstückträgereinsätze ergibt sich ein Baukastensystem für die Bildung von verschiedenen Werkstückkörben mit einem hohen Maß an Flexibilität für die Gestaltung von Werkstückkörben aus den Komponenten des Satzes.

Weitere vorteilhafte Ausführungen ergeben sich aus den abhängigen Ansprüchen.

Im Folgenden wird die Erfindung anhand von Ausführungsbeispielen in den Zeichnungen näher erläutert.
Figur 1 zeigt eine dreidimensionale Ansicht eines Ausführungsbeispiels eines Werkstückkorbsystems mit einem Rahmen und einem Werkstückträgereinsatz, die einen Werkstückkorb bilden.
Figur 2 zeigt eine dreidimensionale Ansicht eines Ausführungsbeispiels eines Halters.
Figur 3 zeigt eine dreidimensionale Ansicht eines Ausführungsbeispiels eines Rahmens.
Figur 4 zeigt eine dreidimensionale Ansicht eines Ausführungsbeispiels eines Werkstückträgereinsatzes.
Figur 5 zeigt eine dreidimensionale Ansicht eines Ausführungsbeispiels eines Werkstückkorbes.
Figur 6 zeigt eine Aufsicht eines weiteren Ausführungsbeispiels eines Werkstückkorbes.
Figur 7 zeigt eine dreidimensionale Ansicht eines weiteren Ausführungsbeispiels eines Werkstückkorbes.
Figur 8 zeigt dreidimensionale Ansichten eines Ausführungsbeispiels eines Korbes.
Figur 9 zeigt eine dreidimensionale Ansicht eines weiteren Ausführungsbeispiels eines Korbes.
Figur 10 zeigt eine dreidimensionale Ansicht eines Ausführungsbeispiels eines Deckels.
Figur 11 zeigt eine dreidimensionale Ansicht eines Ausführungsbeispiels einer Palette mit mehreren Werkstückkörben.

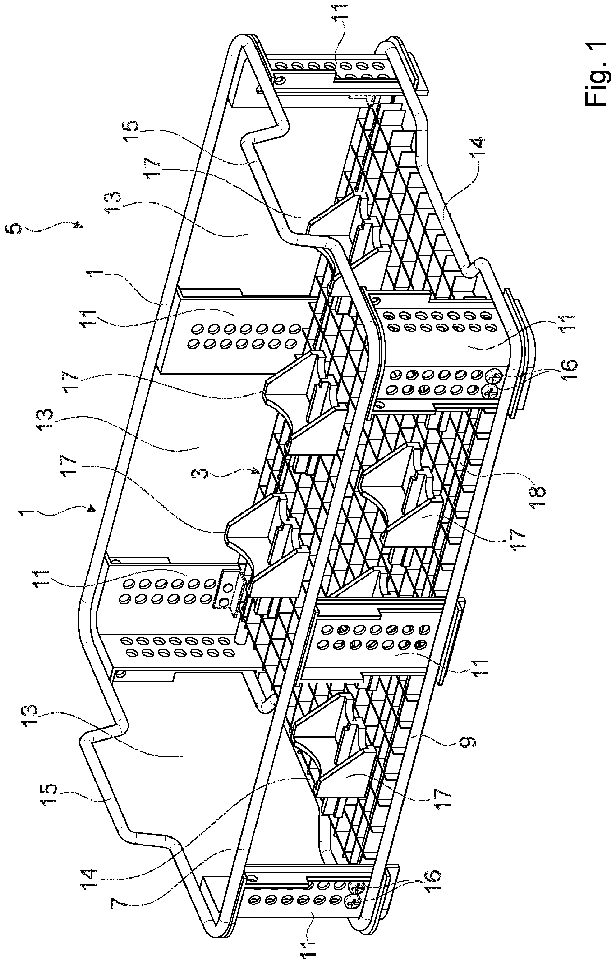

Figur 1 zeigt eine dreidimensionale Ansicht eines Ausführungsbeispiels eines Werkstückkorbsystems mit einem Rahmen 1 und einem Werkstückträgereinsatz 3. Bei diesem Werkstückkorbsystem ist der Werkstückträgereinsatz 3 in den Rahmen 1 eingesetzt und wird von ihm gehalten, um einen Werkstückkorb 5 zu bilden. Nichtdestotrotz wäre auch der Rahmen 1 und der Werkstückträgereinsatz 3 als nicht zusammengesetzte Komponenten ein Werkstückkorbsystem.

Der Werkstückkorb 5 ermöglicht die Zuführung von darin angeordneten Werkstücken (nicht dargestellt) zu Fertigungsstationen, aber auch den Transport der Werkstücke von einer Fertigungsstation zu einer anderen Fertigungsstation sowie die Lagerung von Werkstücken zwischen den Fertigungsschritten.

Der Rahmen 1 bildet die Seitenwand des Werkstückkorbes 5. Der Rahmen 1 umfasst einen umlaufenden oberen starren Draht 7 und einen umlaufenden unteren starren Draht 9, die Oberkante beziehungsweise Unterkante des Rahmens 1 bilden. Zwischen den Drähten 7, 9 sind Lochblechstreifen 11, die fest mit den Drähten 7, 9 verbunden sind, beispielsweise durch eine Schweißverbindung. Anstatt der Lochblechstreifen 11 können auch Bleche ohne Löcher, Gitter oder starre Drähte zur Verbindung der Ober- und Unterkante bildenden Drähte 7, 9 verwendet werden. Es sind gekantete Lochblechstreifen 11 in Eckbereichen des Rahmens 1 vorgesehen und weitere Lochblechstreifen 11 im mittleren Bereich beider Längsseiten. Dadurch wird ein stabiler Rahmen 1 ausgebildet wird, bei dem großflächige Aussparungen 13 zwischen den Lochblechstreifen 11 sind, zum seitlichen Zugang zu den Werkstücken zu ermöglichen.

An den Kopfseiten hat der obere Draht 7 nach oben gebogene Bereiche, die als Griffe 15 dienen. Der untere Draht 9 weist an den Kopfseiten nach innen gebogene Bereiche 14 auf. Zumindest zwei dieser Rahmen 1 sind aufeinander stapelbar, sodass die Griffe 15 im oberen Draht 7 des Werkstückkorbes 5 vor den nach innen gebogenen Bereichen 14 des unteren Drahts 9 des darauf gestapelten Werkstückkorbes 5 positioniert sind, was ein Verrutschen der Rahmen 1 und damit der Werkstückkörbe 5 verhindert.

Zur Ausbildung des Werkstückkorbs 5 wird der Werkstückträgereinsatz 3 in den Rahmen 1 eingesetzt, von diesem gehalten und bildet den Boden des Werkstückkorbs 5. Um den Werkstückträgereinsatz 3 zu halten, ist im Rahmen 1 eine Haltevorrichtung vorgesehen. Der Werkstückträgereinsatz 3 kann in oder auf die Haltevorrichtung gesetzt werden und/oder lösbar mit ihr verbunden werden. In diesem Ausführungsbeispiel hält der Rahmen 1 den Werkstückträgereinsatz 3 mittels Schraubverbindungen. Schrauben 16 an den Längsseiten der Lochblechstreifen 11 in den Eckbereichen verbinden den Werkstückträgereinsatz 3 mit dem Rahmen 1. Obgleich die Schraubverbindungen Transversal- und Rotationsbewegungen zwischen dem Rahmen 1 und dem Werkstückträgereinsatz 3 unterbinden, sind sie lösbar und ermöglichen den Austausch des Werkstückträgereinsatzes 3.

Der Werkstückträgereinsatz 3 umfasst eine Gitterrostplatte 18, deren Größe mit der Rahmengröße derart korrespondiert, dass sie in den Rahmen 1 einsetzbar ist. Auf der Gitterrostplatte 18 des Werkstückträgereinsatzes 3 sind Halter 17 für Werkstücke geklemmt. Die Halter 17 sind aus Kunststoff und weisen an ihrer Unterseite eine Verbindungseinrichtung auf, um sie mit der Gitterrostplatte 18 lösbar zu verbinden.

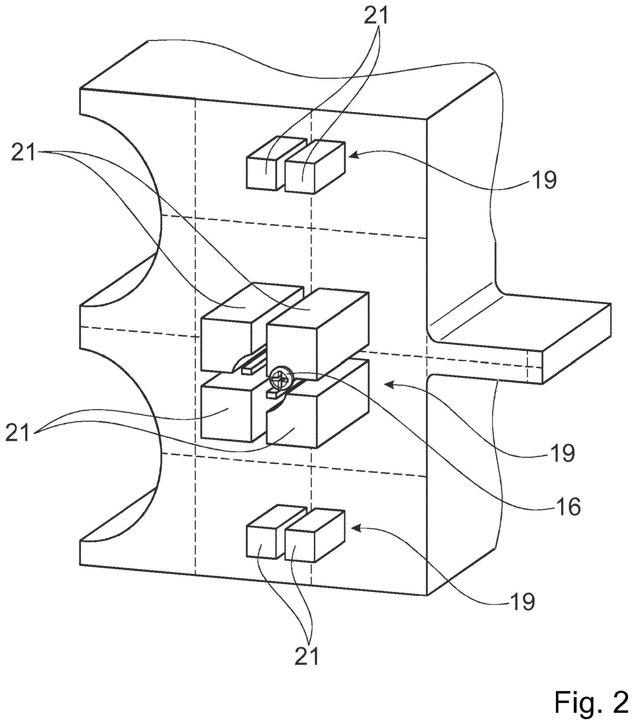

Figur 2 zeigt eine dreidimensionale Ansicht der Unterseite eines Ausführungsbeispiels solch eines Halters 17 mit seiner Verbindungseinrichtung 19, die mehrere Zapfen 21 aufweist. Der Übersichtlichkeit ist die Gitterrostplatte 18 nicht dargestellt, sondern der Verlauf ihrer Flachprofile durch gestrichelte Linien angedeutet.

Die Verbindungseinrichtung 19 ist so auf das Gitterrost gesetzt, dass vier Zapfen 21 in je einer Öffnung des Gitterrostes benachbart zum selben Kreuzungspunkt eingreifen. Die Höhe dieser Zapfen 21 korrespondiert mit der des Gitterrostes. Weitere, kürzere Zapfen 21, die in Öffnungen zu beiden Seiten eines Flachprofils in andere Öffnungen eingreifen, stabilisieren die Position des Halters 17. Die Verbindung zwischen den Zapfen 21 und dem Gitterrost ist vorteilhafterweise kraftschlüssig, indem die Zapfen 21 durch elastische Verformung auf das Flachprofil geklemmt werden, um ein Kippeln des Halters 17 zu verhindern. Die Verbindung kann durch eine Schraube 16 an der Unterseite eines oder mehrerer Zapfen 21 fixiert werden, sodass der Schraubkopf zumindest teilweise über das Flachprofil ragt und ein Abziehen oder Herausfallen des Halters 17 verhindert.

Das mögliche Vorsehen mehrerer Halter 17 auf dem Werkstückträgereinsatz 3, deren freie Positionierbarkeit und Austauschbarkeit ermöglicht beim Aufbau von Werkstückkörben 5 viele Anpassungsmöglichkeiten an Werkstücke und Fertigungsschritte. Die Halter 17 lassen sich durch Halter 17 anderer Gestaltung austauschen und ihre Positionierung auf der Gitterrostplatte 18 lässt sich verändern. Zudem lässt sich der Werkstückträgereinsatz 3 als Ganzes austauschen.

Es ist auch denkbar, dass der Werkstückträgereinsatz 3 integral mit einem oder mehreren Haltern oder Aufnahmen für Werkstücke ausgebildet ist. Auch in diesem Fall ist der Werkstückträgereinsatz 3 als Ganzes austauschbar.

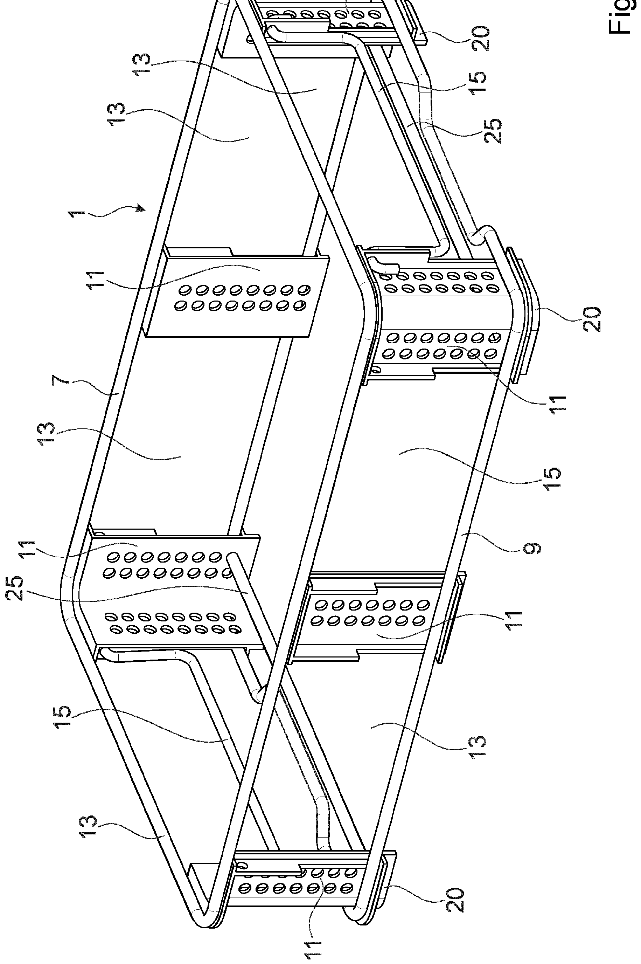

Figur 3 zeigt eine dreidimensionale Ansicht eines Ausführungsbeispiels eines Rahmens 1. Um Wiederholungen zu vermeiden, konzentriert sich die Beschreibung auf Unterschiede zum Rahmen 1 im zuvor beschriebenen Ausführungsbeispiel des Werkstückkorbsystems.

In diesem Ausführungsbeispiel verläuft der obere Draht 7 in einer Ebene. Die Griffe 15 sind ausklappbar an Kopfseiten des Rahmens 1 montiert. Die Lochblechstreifen 11 erstrecken sich vom oberen Draht 7 über den unteren Draht 9 hinaus und bilden unterhalb des unteren Drahtes 9 Vorsprünge 20, die beim Stapeln solch eines Rahmens 1 an der Innenseite des oberen Drahtes 7 des Rahmens 1 darunter eingreifen und ein Verrutschen verhindern.

Die Haltevorrichtung, um einen Werkstückträgereinsatz (in Figur 3 nicht dargestellt) zu halten, umfasst zwei durch das Rahmeninnere laufende parallele Stangen 25, die an gegenüber liegenden Längsseiten des Rahmens 1 befestigt sind. Die Stangen 25 sind an den eckseitigen Lochblechstreifen 11 im unteren Bereich des Rahmens 1 befestigt, beispielsweise durch Schweißen oder Schrauben.

Auf die Stangen 25 kann ein Werkstückträgereinsatz 3 oder mehrere aufeinander gestapelte Werkstückträgereinsätze 3 aufgesetzt werden. Der Rahmen 1 kann in einem Ausführungsbeispiel den oder die Werkstückträgereinsätze 3 lediglich auf Grund ihrer Schwerkraft halten. Ein Verrutschen kann durch die Lochblechstreifen 11 des Rahmens 1, die an Anschlag wirken, verhindert werden. Alternativ können Abkantungen, Halter, Haken oder ähnliches am Werkstückträgereinsatz 3 vorgesehen sein, die auf die Stangen 25 gesetzt oder geschoben werden.

In einem weiteren Ausführungsbeispiel (in Figur 3 nicht dargestellt) sind weitere Stangen 25 vorgesehen, die beispielsweise an den Lochblechstreifen 11 im mittleren Bereich der Längsseiten befestigt sind. Die Stangen 25 verlaufen parallel und in einer Ebenen. In solch einen Rahmen 1 können zwei Werkstückträgereinsätze 3 nebeneinandergesetzt werden.

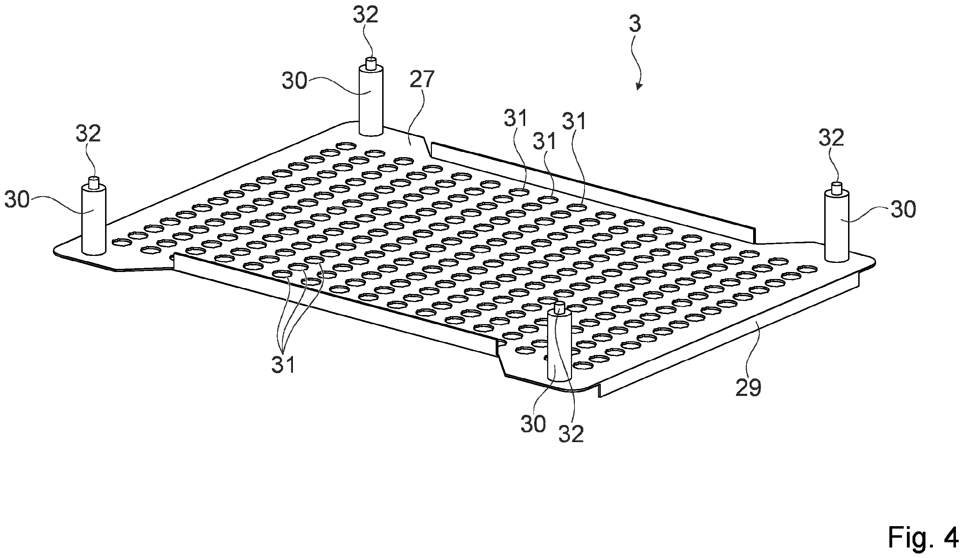

Figur 4 zeigt eine dreidimensionale Darstellung eines Ausführungsbeispiels eines Werkstückträgereinsatzes 3, der in den in Figur 3 beschriebenen Rahmen 1 eingesetzt werden kann. Der Werkstückträgereinsatz 3 umfasst eine an den gegenüberliegenden Seiten abgekantete Metalplatte 27, die auf die Stangen 25 des Rahmens 1 aufsetzbar ist, sodass die Stangen 25 zwischen den Kanten 29 positioniert sind. Der Abstand der Kanten 29 der Platte 27 entspricht dem Abstand der dem Rahmen 1 zugewandten Seiten der Stangen 25, sodass ein Verrutschen der Platte 27 vermieden wird.

Die Platte 27 hat eine Mehrzahl von Aussparungen 31, d.h. Löchern, in die Halter 17 für Werkstücke einsetzbar sind. Alternativ ist ein Eingreifen oder Einhängen von Werkstücken in die Aussparungen 31 möglich. In diesem Ausführungsbeispiel sind die Aussparungen 31 matrixförmig auf der Platte 27 angeordnet.

An ihrer Oberseite weist die Platte 27 zylinderförmige Abstandshalter 30 auf, mittels derer mehrere Platten 27 übereinander stapelbar sind. Um ein Verrutschen der Platten 27 zu vermeiden, hat der Abstandshalter 30 an seiner Oberseite einen Zapfen 32, der in eine Ausnehmung an der Unterseite der darauf angeordneten Platte 27 eingreift. Die Ausnehmung kann beispielsweise durch eine an der Unterseite der Platte 27 angeordnete Hülse oder ein Sackloch ausgebildet sein.

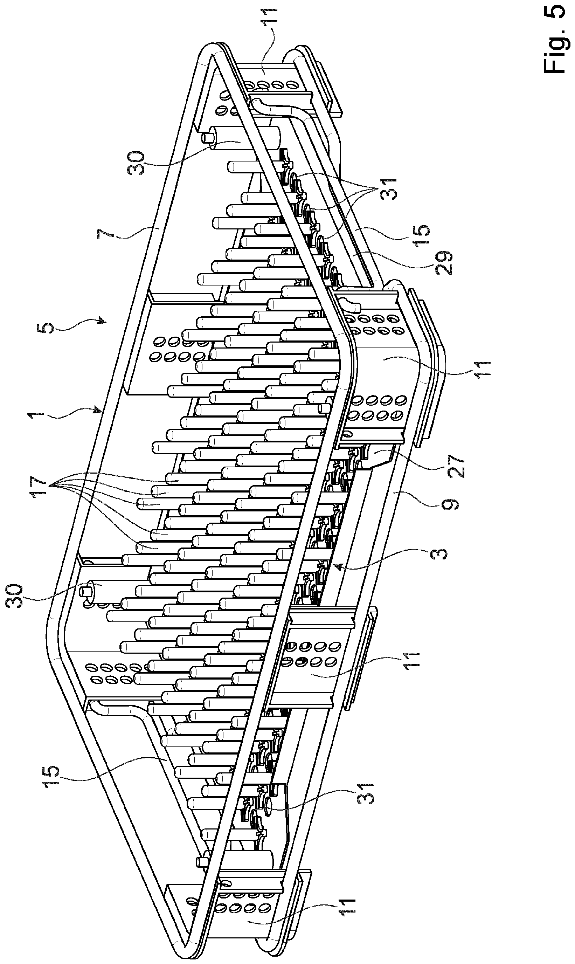

Figur 5 zeigt in einer dreidimensionalen Darstellung eines weiteren Ausführungsbeispiels eines Werkstückkorbes 5, in dem ein Werkstückträgereinsatz 3 von einem Rahmen 1 gehalten wird. Der Rahmen 1 ist flacher als der in Figur 3 gezeigte und weist die in Zusammenhang mit Figur 3 beschriebenen Stangen 25 auf, auf denen der Werkstückträgereinsatz 3 aufgesetzt ist.

Der Werkstückträgereinsatz 3 unterscheidet sich von dem in Figur 4 beschriebenen Werkstückträgereinsatz 3 durch zusätzliche Halter 17, die in einem Teil der Aussparungen 31 angeordnet sind. In jeder zweiten Aussparung 31 ist ein Halter 17 eingesetzt, wobei die Halter 17 benachbarter Reihen zueinander versetzt angeordnet sind. In diesem Ausführungsbeispiel sind die Halter 17 stiftförmig ausgebildet, sodass Werkstücke auf oder zwischen die Halter 17 gesetzt werden können.

Das Vorsehen einer Mehrzahl von Aussparungen 31 erlaubt eine an Werkstücke und Verfahrensschritte anpassbare Anordnung der Halter 17. Es können verschiedene Haltertypen auf derselben Platte 27 verwendet werden.

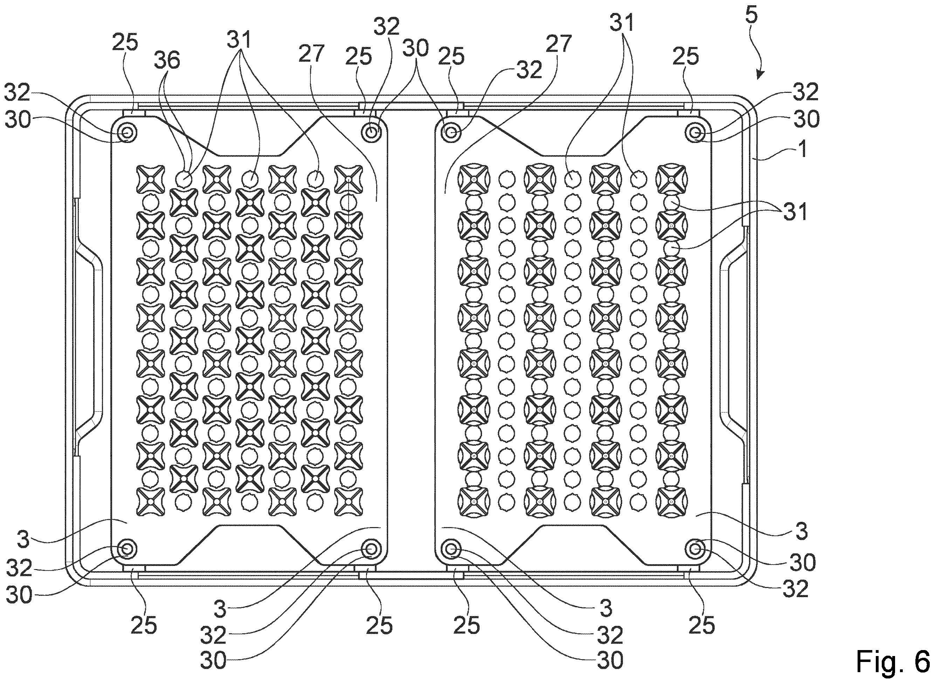

Figur 6 zeigt ein weiteres Ausführungsbeispiel eines Werkstückkorbes 5 in der Aufsicht. Zur Vermeidung von Wiederholungen konzentriert sich die Beschreibung auf Unterschiede zum vorangegangenen Ausführungsbeispiel.

In diesem Ausführungsbeispiel sind zwei Werkstückträgereinsätze 3 nebeneinander auf Stangen 25 des Rahmens 1 angeordnet. Um zwei Werkstückeinsätze 3 zu halten, weist der Rahmen 1 Stangen 25 in den Eckbereichen und der Mitte auf. Sie verlaufen parallel zwischen den Längsseiten und in einer Ebene.

Beide Werkstückträgereinsätze 3 haben eine Grundplatte 27 ähnlich der in Figur 4 beschriebenen mit einer matrixförmigen Anordnung von Aussparungen 31. Allerdings sind die Platten 27 nur etwa halb so groß, was erlaubt zwei Platten 27 nebeneinander auf die Stangen 25 zu setzen.

Einer der Werkstückträgereinsätze 3 weist Halter 17 gleichen Typs und gleicher Anordnung wie im Zusammenhang mit Figur 5 beschrieben auf. Der andere Werkstückträgereinsatz 3 weist Halter 17 eines anderen Typs auf. Auf der Platte 27 dieses Werkstückträgereinsatzes 3 sind die Halter 17 nur in jeder zweiten Reihe und durch eine Aussparung 31 beabstandet voneinander angeordnet.

Die Verbindung von Halter 17 und Aussparung 31 erfolgt mittels einer zapfenförmigen Verbindungseinrichtung an der Unterseite des Halters 17. Die Aussparung 31 hat eine kreisförmige Grundform mit Ausbuchtungen 36. Am Zapfen des Halters 17 sind seitlich herausragende Nasen. Beim Einstecken des Zapfens gleiten die Nasen durch die Ausbuchtungen 36. Der Zapfen kann bis zu einer als Anschlag dienenden Querschnittvergrößerung in die Aussparung 31 gesteckt werden. Drehen des Halters 17 nach dem Einstecken des Zapfens bewirkt eine Verriegelung, da dadurch die Nasen zu den Ausbuchtungen 36 versetzt werden, was ein Herausziehen oder Herausfallen des Halters 17 ohne vorheriges Zurückdrehen verhindert.

Das Ausführungsbeispiel zeigt, dass die Platten 27 mit verschiedenen Haltern 17 bestückt werden können und verschiedene Werkstückträgereinsätze 3 im selben Werkstückkorb 5 miteinander kombiniert werden können. Es ist natürlich auch möglich, verschiedene Haltertypen auf derselben Platte 27 vorzusehen.

Es ist möglich, mehrere Werkstückträgereinsätze 3 übereinander zu stapeln, indem die Platte 27 eines Werkstückträgereinsatzes 3 auf die Abstandshalter 30 der darunter angeordneten Platte 27 aufgesetzt wird. Um ein Verrutschen zu vermeiden, hat der Abstandshalter 30 an seiner Oberseite einen Zapfen 32, der in eine Ausnehmung an der Unterseite der darauf angeordneten Platte 27 eingreift.

Bei aufeinander gestapelten Werkstückträgereinsätzen 3 ist die Höhe des Rahmens 1 vorteilhafterweise derart, dass die Werkstückträgereinsätze 3 nicht über die Rahmenoberseite hinausragen und noch ein weiterer Werkstückkorb 5 auf dem Rahmen 1 stapelbar ist.

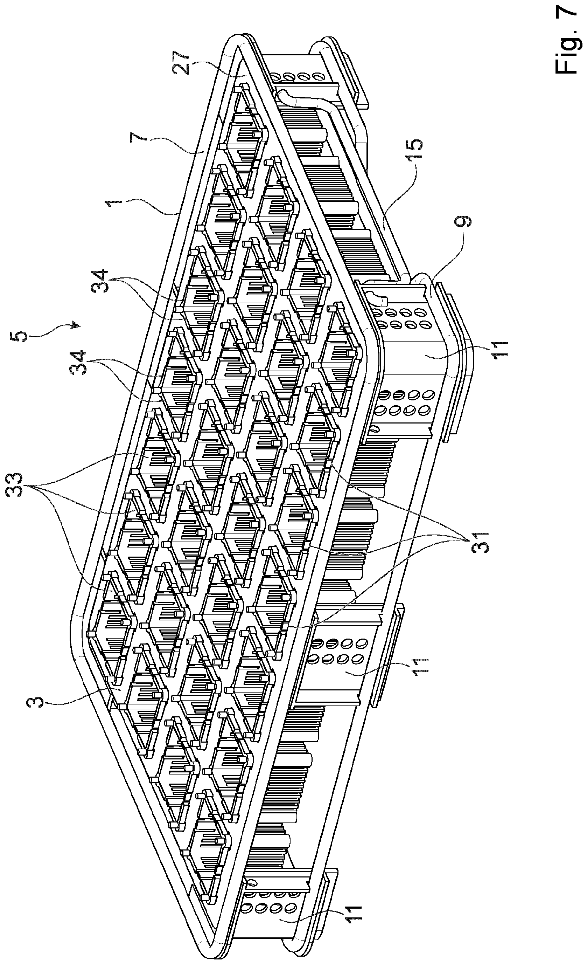

Figur 7 zeigt ein weiteres Ausführungsbeispiel eines Werkstückkorbes 5 in einer dreidimensionalen Ansicht. Um Wiederholungen zu vermeiden, konzentriert sich die Beschreibung auf Unterschiede zu dem in Figur 5 beschriebenen Ausführungsbeispiel.

In diesem Ausführungsbeispiel weist der Werkstückträgereinsatz 3 eine Mehrzahl von Aufnahmen auf, in die Werkstücke (in Figur 7 nicht dargestellt) gelegt werden können.

Der Werkstückträgereinsatz 3 umfasst eine Metallplatte 27 mit einer Mehrzahl von matrixförmig angeordneten quadratischen Aussparungen 31, in die Körbe 33 als Ausführungsbeispiele von Aufnahmen für Werkstücke eingesetzt sind.

Die Platte 27 des Werkstückträgereinsatzes 3 wird mit einer Haltevorrichtung im oberen Bereich des Rahmens 1 gehalten. Dieses kann beispielsweise durch Schrauben 16 oder Stangen 25 erfolgen. Ein Rahmen 1 mit Stangen 25 ist bereits in Zusammenhang mit Figur 3 beschrieben worden; allerdings sind bei diesem Ausführungsbeispiel die Stangen 25 im oberen Bereich des Rahmens 1 angeordnet. Die Platte 27 unterscheidet von der in Zusammenhang mit Figur 4 und 5 beschriebenen Platte 27 im Wesentlichen nur durch die Form und Anordnung der Aussparungen 31.

Die Körbe 33 werden in die Aussparungen eingehängt, sodass der obere Korbrand 34 auf der Platte 27 aufliegt und der Korb 33 wird mittels einer Clipverbindung lösbar fixiert wird.

Auch solch ein Werkstückträgereinsatz 3 mit Körben 33 kann stapelbar ausgebildet sein. In diesem Fall sind die Abstandshalter, die beim Stapeln auf der Platte 27 darunter aufsetzen, an der Unterseite der Platte 27 angeordnet.

Es ist auch denkbar, in einem anderen Ausführungsbeispiel eines Werkstückträgereinsatzes (nicht dargestellt) die Körbe 33 auf eine Bodenplatte aufsetzen, wobei die Körbe 33 gestapelt werden können.

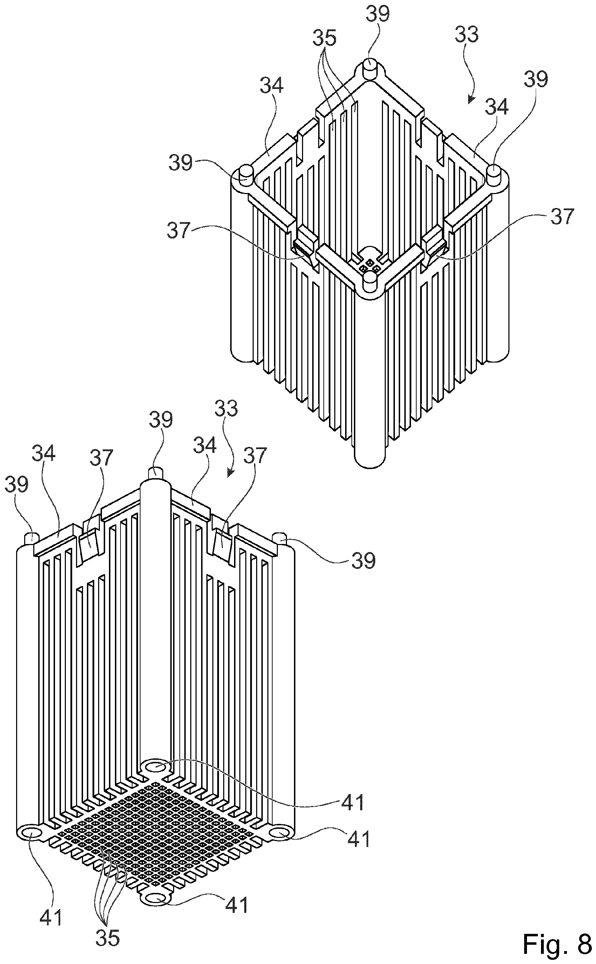

Figur 8 zeigt ein Ausführungsbeispiel eines rechteckigen Korbes 33 für den in Figur 7 gezeigten Werkstückträgereinsatz 3 in dreidimensionalen Ansichten von schräg oben und unten. Der Korbrand 34 hat eine vergrößerte Querschnittfläche, die auf der Platte 27 aufliegt, wenn der Korb in der Aussparung 31 eingehängt ist.

Der Korb 33 hat langgestreckte Aussparungen 35 an seinen Seiten und an der Unterseite, die ein Gitterboden ist, damit die Werkstücke bei den Fertigungsschritten von allen Seiten zugänglich sind. Clips 37 im oberen Bereich der Seitenwände verrasten mit der Platte 27 beim Einsetzen des Korbes 33.

Zapfen 39 an der Oberseite des Korbes 33 auf dem Korbrand 34 und Ausnehmungen 41 am Boden ermöglichen das Aufsetzen eines Deckels oder das Stapeln mehrere Körbe 33 übereinander, sodass die Zapfen 39 in die Ausnehmungen 41 eingreifen.

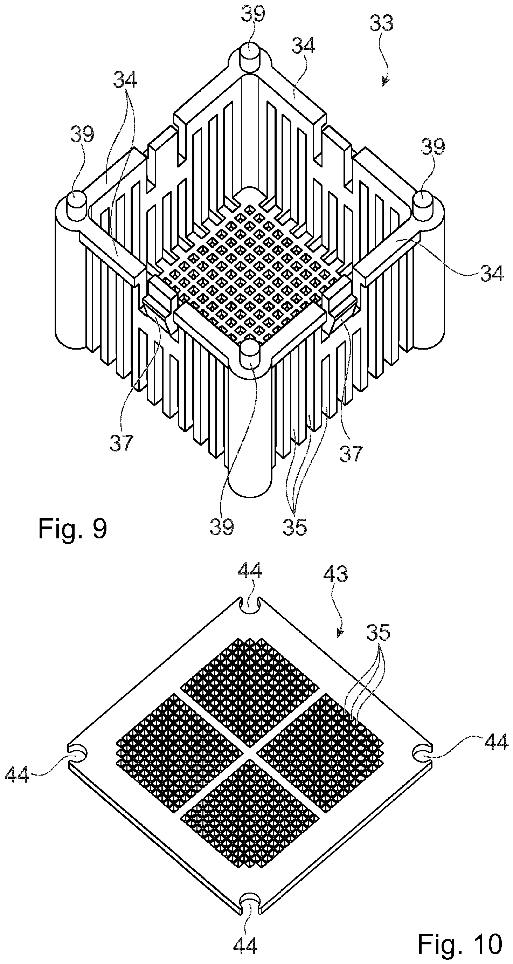

Figur 9 zeigt ein Ausführungsbeispiel eines Korbes 33 für den in Figur 7 gezeigten Werkstückträgereinsatz 3, in einer dreidimensionalen Ansicht von schräg oben. Er unterscheidet sich vom vorher beschriebenen Korb 33 lediglich durch seine geringere Höhe, die halb so groß ist. Zwei mit solch flachen Körben 33 bestückte, übereinander gestapelte Werkstückträgereinsätze 3 haben eine ähnliche Höhe wie ein mit den Körben aus Figur 8 bestückter Werkstückträgereinsatz 3.

Figur 10 zeigt ein Ausführungsbeispiel eines Deckels 43 für die in Figur 8 und 9 dargestellten Körbe 33. Form und Größe des Deckels 43 korrespondiert mit dem Korbrand 34. Der Deckel 43 hat eckseitige Aussparungen 44, in die die Zapfen 39 des damit abgedeckten Korbes 33 eingreifen können. Des Weiteren hat der Deckel 43 durch einen gitterförmigen Bereich ausgebildete Aussparungen 35, damit die Werkstücke auch durch den Deckel 43 zugänglich sind.

Solche Deckel 43 können an der Unterseite eines Werkstückträgereinsatzes 3 mit einer Mehrzahl von Körben 33 befestigt sein. Beim Stapeln solcher Werkstückträgereinsätze 3 werden die Deckel 43 an der Unterseite auf die Körbe 33 des Werkstückträgereinsatzes 3 darunter aufgesetzt.

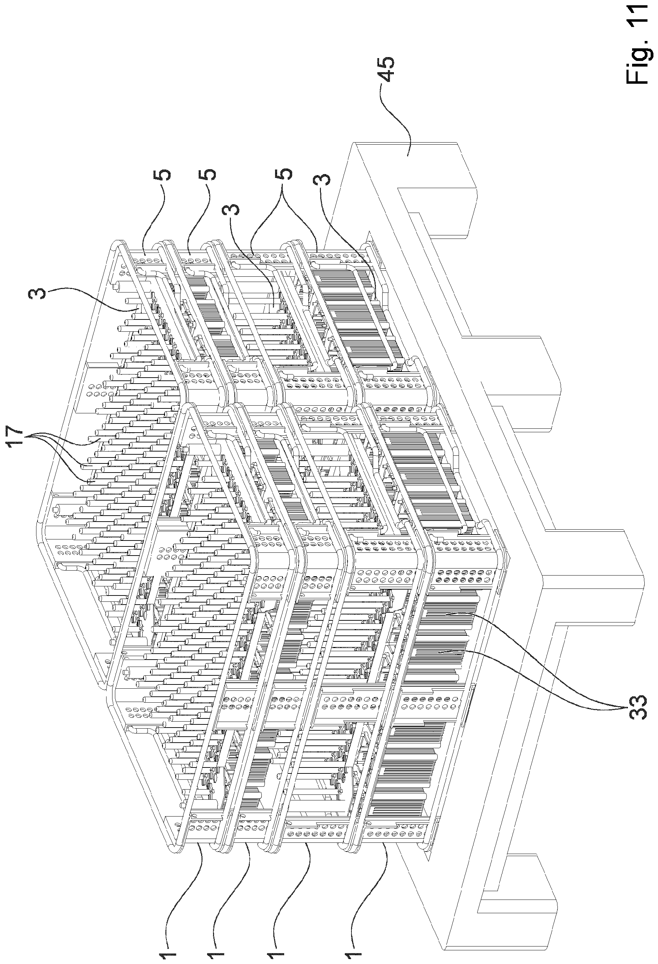

Figur 11 zeigt ein Ausführungsbeispiel einer Palette 45 mit mehreren darauf gestapelten Werkstückkörben 5 unterschiedlicher Höhe und mit unterschiedlichen Werkstückträgereinsätzen 3 in dreidimensionaler Ansicht.

Mehrere Stapel von Werkstückkörben 5 sind auf der Palette 45 nebeneinander angeordnet. Die Palette 45 erlaubt den Transport mehrerer Werkstückkörbe 5 zu einer Fertigungsstation und die Durchführung eines Fertigungsschrittes bei Werkstücken in mehreren Werkstückkörben 5 gleichzeitig.

Durch die freie Kombinierbarkeit von Rahmen 1 unterschiedlicher Höhe und mit unterschiedlichen Halterichtungen mit verschiedenen Werkstückträgereinsätzen 3, bei denen zudem unterschiedliche Aufnahmen 33 und Halter 17 für Werkstücke miteinander kombiniert werden können, ergibt sich ein großes Maß an Flexibilität und Anpassungsfähigkeit bei der Konfiguration der Werkstückkörbe 5 als solchen als auch deren Zusammenstellung durch Stapelung. Die Rahmenhöhen in einem Satz von Werkstückkorbsystemen sind vorteilhafterweise Vielfache einer Grundhöhe, die der Höhe des flachsten Werkstückkorbes 5 entspricht. Beispielsweise gibt es Werkstückkörbe 5 mit der Grundhöhe, der doppelten Grundhöhe und der dreifachen Grundhöhe. Auf diese Weise lassen sich in einfacher Weise Stapel von gleicher Höhe bilden. Beispielsweise sind in einem Stapel zwei Werkstückkörbe mit dreifacher Grundhöhe und in einem gleich hohen Stapel sind zwei Werkstückkörbe mit doppelter Grundhöhe und zwei Werkstückkörbe mit Grundhöhe.

Es ist möglich, durch den Austausch sowohl von Aufnahmen 33 und Haltern 17 als auch von Werkstückträgereinsätzen 3 als Ganzen Werkstückkörbe 5 schnell und kostengünstig an sich verändernde Fertigungsbedingungen anzupassen. Zudem ist die Kombinierbarkeit materialsparend, da die einzelnen Komponenten, seien es Rahmen 1 oder Werkstückträgereinsätze 3 oder deren Halter 17 und Aufnahmen 33, miteinander kombinierbar sind. In der Fertigungsvorbereitung können somit aus einem Satz verschiedener Rahmen 1, die sich aufeinander stapeln lassen, jedoch unterschiedliche Höhe haben, und verschiedener Werkstückträgereinsätze 3 sowie verschiedener Aufnahmen 33 und Halter 17 Werkstückkörbe 5 für unterschiedliche und sich schnell ändernde Fertigungsbedingungen gebildet werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Bezugszeichen

- 1: Rahmen
- 3: Werkstückträgereinsatz
- 5: Werkstückkorb
- 7,9: Draht
- 11: Lochblechstreifen
- 14: Drahtbereich
- 15: Griff
- 16: Schraube
- 17: Halter
- 18: Gitterrostplatte
- 19: Verbindungseinrichtung
- 20: Vorsprung
- 21: Zapfen
- 25: Stange
- 27: Platte
- 29: Kante
- 30: Abstandshalter
- 31: Aussparung
- 32: Zapfen
- 33: Korb
- 34: Korbrand
- 35: Aussparung
- 36: Ausbuchtung
- 37: Clip
- 39: Zapfen
- 41: Ausnehmung
- 43: Deckel
- 44: Aussparung
- 45: Palette

## Patentansprüche

1. Werkstückkorbsystem mit
zumindest einem austauschbaren Werkstückträgereinsatz (3) und
einem Rahmen (1) mit einer Haltevorrichtung (16, 25) für den in den Rahmen (1) einsetzbaren oder eingesetzten zumindest einen Werkstückträgereinsatz (3), sodass bei eingesetztem zumindest einem Werkstückträgereinsatz (3) der Rahmen (1) und der zumindest eine Werkstückträgereinsatz (3) zusammen einen Werkstückkorb (5) bilden,
wobei der Rahmen (1) derart ausgebildet ist, dass mehrere Rahmen (1) übereinander stapelbar sind,
und wobei die Haltevorrichtung (16, 25) derart ausgebildet ist, dass sie den Werkstückträgereinsatz (3) lösbar hält,
**dadurch gekennzeichnet, dass**
der Rahmen (1) eine Drahtoberkante (7) und eine Drahtunterkante (9) umfasst, die voneinander beabstandet sind und durch Blechstreifen (11) fest verbunden sind, wobei zwischen den Blechstreifen (11) großfläche Aussparungen (13) sind.

2. Werkstückkorbsystem nach Anspruch 1,
wobei die Haltevorrichtung (3) derart ausgebildet ist, dass sie den zumindest einen Werkstückträgereinsatz (3) mittels einer Schraubverbindung und/oder mittels einer Pressverbindung und/oder mittels Zusammensetzens und/oder mittels Reibung hält.

3. Werkstückkorbsystem nach Anspruch 1 oder 2,
wobei der Rahmen (1) ausgebildet ist, in ihn mehrere Werkstückträgereinsätze (3) einzusetzen, sodass die Werkstückträgereinsätze (3) übereinander und/oder nebeneinander angeordnet sind.

4. Werkstückkorbsystem nach Anspruch 3,
wobei der Rahmen (1) ausgebildet ist, in ihn mehrere Werkstückträgereinsätze (3) einzusetzen, von denen sich zumindest zwei unterscheiden.

5. Werkstückkorbsystem nach einem der vorhergehenden Ansprüche,
wobei der Werkstückträgereinsatz (3) zumindest eine Aufnahme (33) oder einen Halter (17) für zumindest ein Werkstück aufweist.

6. Werkstückkorbsystem nach Anspruch 5,
wobei die Aufnahme (33) oder der Halter (17) lösbar mit einer Platte (27) des Werkstückträgereinsatzes (3) verbunden ist und austauschbar ist.

7. Werkstückkorbsystem nach Anspruch 6,
wobei die Aufnahme (33) oder der Halter (17) mittels einer Klemmverbindung und/oder einer Rastverbindung und/oder einer Schraubverbindung oder durch Zusammensetzen mit der Platte (27) verbunden sind.

8. Werkstückkorbsystem nach einem der Ansprüche 6 oder 7,
wobei die Platte 27 Aussparungen 31 umfasst, in denen die Aufnahmen (33) und/oder die Halter (17) für Werkstücke einsetzbar und/oder einklemmbar und/oder einrastbar sind.

9. Werkstückkorbsystem nach einem der Ansprüche 5 bis 7,
wobei der Werkstückträgereinsatz (3) eine Gitterplatte (28) umfasst, auf die die Aufnahmen (33) und/oder die Halter (17) klemmbar oder aufsetzbar sind und/oder in deren Aussparungen die Aufnahmen (33) und/oder die Halter (17) klemmbar und/oder einsetzbar sind.

10. Werkstückkorbsystem nach einem der vorhergehenden Ansprüche
wobei der Werkstückträgereinsatz (3) Metall und/oder Kunststoff umfasst und der Rahmen (1) metallen ist.

11. Werkstückkorbsystem nach einem der vorhergehenden Ansprüche,
wobei der Rahmen (1) ausklappbare Griffe (15) aufweist.

12. Satz einer Mehrzahl von Werkstückkorbsystemen nach einem der vorhergehenden Ansprüche, wobei zumindest einer der Werkstückträgereinsätze (3) in mehr als einen der Rahmen (1) einsetzbar ist, um einen Werkstückkorb (5) zu bilden.

13. Satz nach Anspruch 12,
wobei jedes Werkstückkorbsystem eine Rahmenhöhe aus einer Gruppe von vorgegebenen Rahmenhöhen hat und sich die Rahmenhöhen zumindest zweier Rahmen (1) unterscheiden.

14. Satz nach Anspruch 12 oder 13,
wobei die Werkstückträgereinsätze (3) zumindest zweier Werkstückkorbsysteme sich unterscheiden.

15. Satz nach einem der Ansprüche 12 bis 14,
wobei sich die Aufnahmen (33) und/oder die Halter (17) eines der Werkstückträgereinsätze (3) sich hinsichtlich ihrer Form und/oder Anordnung von den Aufnahmen (33) und/oder den Haltern (17) eines anderen Werkstückträgereinsatzes (3) unterscheiden.

## Claims

1. Workpiece basket system, having
at least one replaceable workpiece carrier insert (3) and a frame (1) having a holding device (16, 25) for the at least one workpiece carrier insert (3) insertable or inserted into the frame (1), such that, when at least one workpiece carrier insert (3) is inserted, the frame (1) and the at least one workpiece carrier insert (3) together form a workpiece basket (5),
wherein the frame (1) is designed such that multiple frames (1) can be stacked one above the other,
and wherein the holding device (16, 25) is designed such that it detachably holds the workpiece carrier insert (3),
**characterized in that**
the frame (1) comprises a wire upper edge (7) and a wire lower edge (9) which are spaced apart from one another and are fixedly connected by sheet metal strips (11), wherein large-surface recesses (13) are formed between the sheet metal strips (11).

2. Workpiece basket system according to claim 1,
wherein the holding device (3) is designed such that it holds the at least one workpiece carrier insert (3) by means of a screw connection and/or by means of a press connection and/or by means of assembly and/or by means of friction.

3. Workpiece basket system according to claim 1 or 2,
wherein the frame (1) is designed to insert multiple workpiece carrier inserts (3) into it, such that the workpiece carrier inserts (3) are arranged one above the other and/or next to one another.

4. Workpiece basket system according to claim 3,
wherein the frame (1) is designed to insert multiple workpiece carrier inserts (3) into it, of which at least two differ.

5. Workpiece basket system according to any of the preceding claims,
wherein the workpiece carrier insert (3) has at least one receptacle (33) or one holder (17) for at least one workpiece.

6. Workpiece basket system according to claim 5,
wherein the receptacle (33) or the holder (17) is detachably connected to a plate (27) of the workpiece carrier insert (3) and is replaceable.

7. Workpiece basket system according to claim 6,
wherein the receptacle (33) or the holder (17) is connected to the plate (27) by means of a clamping connection and/or a latching connection and/or a screw connection or by assembly.

8. Workpiece basket system according to claim 6 or 7,
wherein the plate 27 comprises recesses 31 in which the receptacles (33) and/or the holders (17) for workpieces can be inserted and/or clamped and/or latched.

9. Workpiece basket system according to any of claims 5 to 7,
wherein the workpiece carrier insert (3) comprises a lattice plate (28) on which the receptacles (33) and/or the holders (17) can be clamped or placed, and/or in the recesses of which the receptacles (33) and/or the holders (17) can be clamped and/or inserted.

10. Workpiece basket system according to any of the preceding claims,
wherein the workpiece carrier insert (3) comprises metal and/or plastics material, and the frame (1) is metal.

11. Workpiece basket system according to any of the preceding claims,
wherein the frame (1) has fold-out handles (15).

12. Set of multiple workpiece basket systems according to any of the preceding claims, wherein at least one of the workpiece carrier inserts (3) can be inserted into more than one of the frames (1) in order to form a workpiece basket (5).

13. Set according to claim 12,
wherein each workpiece basket system has a frame height of a group of predetermined frame heights and the frame heights of at least two frames (1) differ.

14. Set according to claim 12 or 13,
wherein the workpiece carrier inserts (3) of at least two workpiece basket systems differ.

15. Set according to any of claims 12 to 14,
wherein the receptacles (33) and/or the holders (17) of one of the workpiece carrier inserts (3) differ in terms of their shape and/or arrangement from the receptacles (33) and/or the holders (17) of another workpiece carrier insert (3).

## Revendications

1. Système de panier de pièces comportant
au moins un insert de support de pièces interchangeable (3) et un cadre (1) comportant un dispositif de maintien (16, 25) pour l'au moins un insert de support de pièces (3) pouvant être inséré dans le cadre (1), de sorte que lorsque l'au moins un insert de support de pièces (3) est inséré, le cadre (1) et l'au moins un insert de support de pièces (3) forment conjointement un panier de pièces (5),
dans lequel le cadre (1) est conçu de manière à ce que plusieurs cadres (1) puissent être empilés,
et dans lequel le dispositif de maintien (16, 25) est conçu de manière à maintenir de manière amovible l'insert de support de pièces (3),
**caractérisé en ce que**
le cadre (1) comprend un bord supérieur en fil (7) et un bord inférieur en fil (9), qui sont espacés l'un de l'autre et sont reliés fermement par des bandes de tôle (11), dans lequel de grandes encoches (13) se trouvent entre les bandes de tôle (11).

2. Système de panier de pièces selon la revendication 1,
dans lequel le dispositif de maintien (3) est conçu de manière à maintenir l'au moins un insert de support de pièces (3) au moyen d'une liaison filetée et/ou au moins d'une liaison par pression et/ou au moyen d'un assemblage et/ou au moyen de friction.

3. Système de panier de pièces selon la revendication 1 ou 2,
dans lequel le cadre (1) est conçu pour insérer en son sein plusieurs inserts de support de pièces (3), de sorte que les inserts de support de pièces (3) soient agencés l'un au-dessus de l'autre et/ou à côté l'un de l'autre.

4. Système de panier de pièces selon la revendication 3,
dans lequel le cadre (1) est conçu pour insérer en son sein plusieurs inserts de support de pièces (3), dont au moins deux se différencient.

5. Système de panier de pièces selon l'une quelconque des revendications précédentes,
dans lequel l'insert de support de pièces (3) présente au moins un logement (33) ou un support (17) pour au moins une pièce.

6. Système de panier de pièces selon la revendication 5,
dans lequel le logement (33) ou le support (17) est relié de manière amovible avec une plaque (27) de l'insert de support de pièces (3) et est interchangeable.

7. Système de panier de pièces selon la revendication 6,
dans lequel le logement (33) ou le support (17) est relié à la plaque (27) au moyen d'une liaison à serrage et/ou d'une liaison par encliquetage et/ou d'une liaison filetée ou par assemblage.

8. Système de panier de pièces selon l'une des revendications 6 ou 7,
dans lequel la plaque 27 comprend des encoches 31, dans lesquelles les logements (33) et/ou les supports (17) pour les pièces peuvent être insérés et/ou serrés et/ou encliquetés.

9. Système de panier de pièces selon l'une des revendications 5 à 7,
dans lequel l'insert de support de pièces (3) comprend une plaque de grille (28), sur laquelle les logements (33) et/ou les supports (17) peuvent être serrés ou placés et/ou dans les encoches de laquelle les logements (33) et/ou les supports (17) peuvent être serrés et/ou insérés.

10. Système de panier de pièces selon l'une quelconque des revendications précédentes
dans lequel l'insert de support de pièces (3) comprend du métal et/ou du plastique et le cadre (1) est métallique.

11. Système de panier de pièces selon l'une quelconque des revendications précédentes,
dans lequel le cadre (1) présente des poignées rétractables (15).

12. Ensemble d'une pluralité de systèmes de panier de pièces selon l'une quelconque des revendications précédentes, dans lequel au moins un des inserts de support de pièces (3) peut être inséré dans plus d'un des cadres (1), afin de former un panier de pièces (5).

13. Ensemble selon la revendication 12,
dans lequel chaque système de panier de pièces a une hauteur de cadre parmi un groupe de hauteurs de cadre prédéfinies et les hauteurs de cadre d'au moins deux cadres (1) sont différentes.

14. Ensemble selon la revendication 12 ou 13,
dans lequel les inserts de support de pièces (3) d'au moins deux systèmes de panier de pièces sont différents.

15. Ensemble selon l'une des revendications 12 à 14,
dans lequel les logements (33) et/ou les supports (17) d'un des inserts de support de pièces (3) sont différents en ce qui concerne leur forme et/ou l'agencement des logements (33) et/ou des supports (17) d'un autre insert de support de pièces (3).
